# EUROPÄISCHE PATENTANMELDUNG

(11) **EP 1 790 774 A1**
(43) Veröffentlichungstag der Anmeldung: **30.05.2007**
(21) Anmeldenummer: 06024081.9
(22) Anmeldetag: 21.11.2006
(51) Int. Cl.: E01F 9/011, A01M 29/02

(54) **Elektronische Wildwarneinrichtung an Strassen**

(30) Priorität: 24.11.2005 DE 102005057701
(71) Anmelder: Vetters, Dietmar, 09212 Limbach-Oberfrohna / OT Kaufungen (DE); Rank, Winfried, 09130 Chemnitz (DE); Dörenbrak, Uwe, 99768 Ilfeld (DE)
(72) Erfinder: Vetters, Dietmar, 09212 Limbach-Oberfrohna / OT Kaufungen (DE); Rank, Winfried, 09130 Chemnitz (DE); Dörenbrak, Uwe, 99768 Ilfeld (DE)
(74) Vertreter: Heyner, Klaus

(57) **Zusammenfassung**

Die Erfindung beschreibt eine Wildwarneinrichtung an Straßen mit und ohne Leitpfosten mit mindestens einem an den Kraftfahrzeugen vorgesehenen Sender (4) und mindestens einem an der Straße angebrachten Empfänger (5), dem eine Signalverarbeitungseinheit (7) nachgeschaltet ist, die ein Warnsignal generiert, welches durch einen Signalgeber (8) ausgesendet wird, wobei die Energieversorgungseinheit (10) für den Empfänger (5), die Signalverarbeitungseinheit (7) und den Signalgeber (8) ggf. eine Solarzellenbaugruppe (11) aufweist.

Die neue Wildwarneinrichtung zeichnet sich dadurch aus, dass für die Signalübertragung (6) vom Sender (4) an den Empfänger (5) alternativ oder in Kombination Radar-, Infrarot-, Ultraschallsignale und dgl. und/oder akustische Signale vorgesehen sind. Als weiteres Merkmal ist hervorzuheben, dass die Warnsignale in Tonhöhe, -stärke, -folge und -frequenz variabel gestaltet sind

## Beschreibung

Die Erfindung betrifft eine elektronische Wildwarneinrichtung an Straßen zur Vermeidung von Wildunfällen zu allen Tages- und Nachtzeiten und bei beliebigen Streckeneigenschaften.

Da der Lärm der sich nähernden Kraftfahrzeuge nicht ausreicht, um Wildtiere vom Überqueren der Fahrbahn abzuhalten, sind bereits verschiedene Maßnahmen getroffen worden, um die Zahl der Wildunfälle im Straßenverkehr zu senken. Doch bedeutet das Anlegen von Wildbrücken, Wildtunneln und Wildzäunen in gefährdeten Bereichen einerseits einen hohen Kostenaufwand und andererseits eine wesentliche Einschränkung für die Tiere, wodurch deren natürliche Gewohnheiten unterbunden werden.

Eine Alternative stellen Wildwarneinrichtungen an Straßen dar, die die Tiere durch ausgesendete Signale derart reizen, dass sie bei Annäherung der Kraftfahrzeuge verharren und von einem Überqueren der Fahrbahn abgehalten werden. Bereits bekannt sind Wildwarneinrichtungen, die zu diesem Zweck optische und/oder akustische Signale aussenden. Als optische Signale dienen insbesondere Lichtblitze, während akustische Signale z. B. in Form von Warntönen abgestrahlt werden. Sowohl die optischen als auch die akustischen Signale werden dabei durch das Scheinwerferlicht des sich nähernden Fahrzeugs ausgelöst. Zur Signalauslösung wird das Scheinwerferlicht mittels eines fotoelektrischen Empfängers detektiert. Dabei kann der fotoelektrische Empfänger eine Fotodiode, ein Fotowiderstand, ein Fototransistor oder eine Solarzelle sein.

In der DE 200 04 595 U1 wird eine Wildwarneinrichtung offenbart, bei der die Wahrnehmungssinne von Tieren gezielt angesprochen werden. Dabei besteht die Einrichtung aus einer Kombination von unabhängig voneinander wirkenden Funktionseinheiten, bei der die Tiere optisch, durch Schall und durch den Geruchssinn im Bewegungsablauf beeinflusst werden.

Eine weitere Wildwarneinrichtung dieser Art wird in der DE 40 33 382 A1 beschrieben. Bei dieser Wildwarneinrichtung, die sich an Straßen mit Leitpfosten befindet, lösen Scheinwerfer vorbeifahrender Kraftfahrzeuge ein Warnsignal aus. Um ein akustisches Warnsignal zu erzeugen, weist die Warneinrichtung wenigstens einen Schallsender auf, der über eine Schaltstufe initiierbar ist. Die Schaltstufe ist mit einem im Leitpfosten angeordneten lichtempfindlichen Sensor verbunden. Für den Schallsender ist für Energieversorgung wenigstens eine Solarzellenbaugruppe im Leitpfosten vorgesehen. Als Sensor kann entweder die Solarzellenbaugruppe oder ein zusätzliches Fotoelement, was am Leitpfosten angeordnet ist, dienen.

Der Nachteil der bisher bekannten Wildwarneinrichtungen besteht darin, dass deren Funktionstüchtigkeit nur in der Dämmerung, bei Nacht und bei eingeschaltetem Scheinwerferlicht gegeben ist. Erschwerend kommt hinzu, dass das Licht des Fahrzeuges mit einer bestimmten Intensität auf den Empfänger treffen muss, um ein Signal auszulösen. Auf Grund der Scheinwerfereinstellung kann nur ein recht geringer Auslösevorlauf, d. h. die Zeit bzw. Entfernung vom Erfassen des Fahrzeugs bis zu dessen Ankunft an der erfassenden Warneinrichtung, erreicht werden. Ein weiteres gravierendes Problem tritt in Kurven und beim Straßenverlauf über Kuppen auf, bei denen das Licht erst entsprechend verspätet auf die Warneinrichtung fällt.

Die Aufgabe der Erfindung besteht darin, eine Wildwarneinrichtung nach Anspruch 1 bereitzustellen, die unabhängig von Tageszeit und Streckeneigenschaften die Tiere rechtzeitig vor dem Überqueren der Fahrbahn warnt.

Die Aufgabe der Erfindung wird durch eine Wildwarneinrichtung gelöst, bei der zur Auslösung des Signals nicht mehr oder nicht nur das Scheinwerferlicht des Kraftfahrzeuges genutzt wird. Vielmehr werden zur Aktivierung der Wildwarneinrichtung alle sich für eine drahtlose Signalübertragung vom Kraftfahrzeug aus eignenden Signalquellen einzeln oder in Kombination genutzt.

Bei der erfindungsgemäßen Wildwarneinrichtung für Straßen ist das Kraftfahrzeug mit mindestens einem Sender ausgestattet. Dieser überträgt Signale an mindestens einen Empfänger, der sich an der Straße befindet. Diesem Empfänger ist eine Signalverarbeitungseinheit nachgeschaltet, die ein Warnsignal generiert, welches durch einen der Signalverarbeitungseinheit nachgeschalteten Signalgeber ausgesendet wird. Dabei werden der Empfänger, die Signalverarbeitungseinheit und der Signalgeber über eine integrierte Energieversorgungseinheit, die ggf. eine Solarzellenbaugruppe enthält, energetisch versorgt.

Erfindungsgemäß wird die Signalübertragung vom Sender, der sich am Kraftfahrzeug befindet, an den Empfänger, der sich als Bestandteil der Empfängereinheit an der Straße befindet , alternativ oder in Kombination über Radar-, Infrarot-, Ultraschallsignale und dgl. und/oder unter Nutzung vom Fahrzeug abgegebener akustischer Signale realisiert. Diese ermöglichen eine sichere Signalübertragung auch bei Tage sowie eine Signalintensität, die für einen ausreichenden Auslösevorlauf notwendig ist. Beispielsweise Radar- und Ultraschallsignale können über größere Entfernungen als das Licht des Scheinwerfers sicher empfangen werden und erreichen auch in der Nähe von Bergkuppen und in Kurven den oder die Empfänger rechtzeitig.

In einer vorteilhaften Ausgestaltung der Erfindung ist als Energieversorgungseinheit eine auf einen Speicherkondensator arbeitende Solarzellenbaugruppe vorgesehen. Dabei wird der Speicherkondensator durch die Solarzellenbaugruppe aufgeladen. Auf diese Weise wird die Energieversorgung der Empfängereinheit auch während lichtarmer Perioden gewährleistet und die stete Funktionstüchtigkeit der Wildwarneinrichtung gesichert.

Vorzugsweise werden die Warnsignale variabel gestaltet, um möglichen Gewöhnungseffekten bei den Tieren zuvorzukommen, die sich bei monotonen Warnsignalen mit der Zeit einstellen könnten. In einer besonders vorteilhaften Ausführung ist in den Prozess bis zur Signalgenerierung eine Geräuschmodulation integriert. Dabei werden beispielsweise Frequenzen und Amplituden des Warnsignals, in diesem Falle die Tonhöhe, Tonfolge und Lautstärke eines Tonsignals, in Abhängigkeit von der Zeit, der Temperatur oder per Zufallsgenerator verändert.

Weitere vorteilhafte Ausgestaltungen der Erfindung ergeben sich aus der folgenden Beschreibung eines Ausführungsbeispiels. Dabei zeigt:

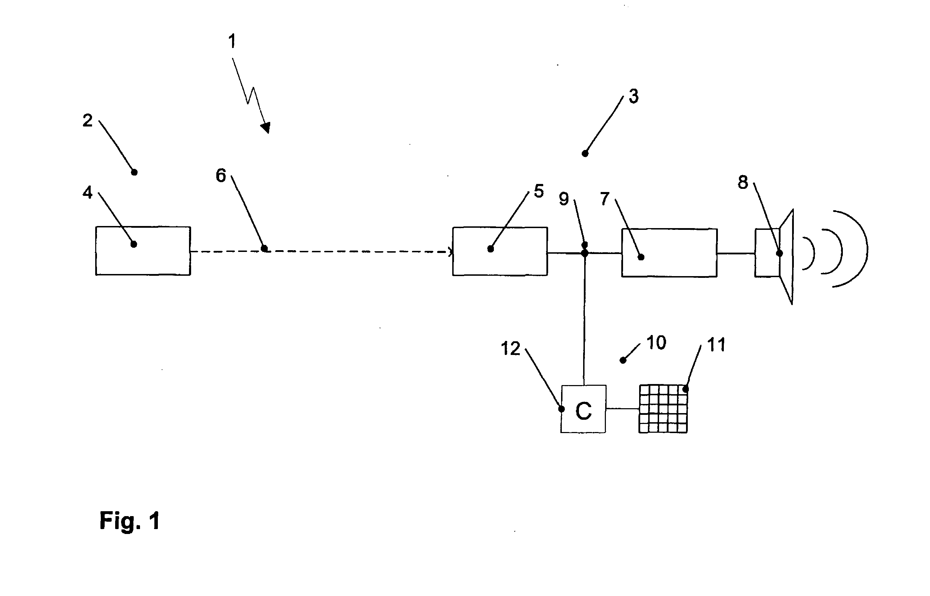

Fig. 1 ein Blockschaltbild einer Ausführung der erfindungsgemäßen Wildwarneinrichtung.

Die Wildwarneinrichtung 1 ist gemäß Fig. 1 in eine Kraftfahrzeugeinheit 2 und eine Empfängereinheit 3 unterteilt. Die Kraftfahrzeugeinheit 2 besteht aus einem in einem Kraftfahrzeug integrierten Sender 4. Der Empfänger 5, die Signalverarbeitungseinheit 7, der Signalgeber 8, die Solarzellenbaugruppe 11 und der Speicherkondensator 12 sind in der Empfängereinheit 3 zusammengefasst.
Bei Betätigung der Wildwarneinrichtung überträgt der Sender 4 Signale an den Empfänger 5 über den Signalübertragungsweg 6, wobei der Empfänger 5 mit der Signalverarbeitungseinheit 7 und dem Signalgeber 8 verschaltet ist. Gemäß dieser Ausführung ist das Ergebnis der Signalverarbeitung in der Signalverarbeitungseinheit 7 eine Tonformung und der Signalgeber 8 in diesem Fall ein Tongeber 8.
Über eine Schnittstelle 9 zwischen dem Empfänger 5 und der Signalverarbeitungseinheit 7 wird die Empfängereinheit 3 der Wildwarneinrichtung 1 über eine Energieversorgungseinheit 10, die aus der Solarzellenbaugruppe 11 und dem Speicherkondensator 12 besteht, mit Energie versorgt. Dabei ist der Speicherkondensator 12 der Solarzellenbaugruppe 11 vorgeschaltet und wird durch die Solarzellenbaugruppe 11 geladen.

Die Empfängereinheit 3 ist als kompaktes Gerät ausgeführt und kann beispielsweise an Straßenleitpfosten, Bäumen oder an separaten Pfosten befestigt werden.

### LISTE DER BEZUGSZEICHEN

- 1: Wildwarneinrichtung
- 2: Kraftfahrzeugeinheit der Wildwarneinrichtung 1
- 3: Empfängereinheit der Wildwarneinrichtung 1
- 4: Sender im Kraftfahrzeug
- 5: Empfänger
- 6: Signalübertragungsweg vom Sender 2 zum Empfänger 3
- 7: Signalverarbeitungseinheit
- 8: Signalgeber
- 9: Schnittstelle
- 10: Energieversorgungseinheit
- 11: Solarzellenbaugruppe
- 12: Speicherkondensator

## Patentansprüche

1. Wildwarneinrichtung an Straßen mit und ohne Leitpfosten mit mindestens einem an den Kraftfahrzeugen vorgesehenen Sender (4) und mindestens einem an der Straße angebrachten Empfänger (5), dem eine Signalverarbeitungseinheit (7) nachgeschaltet ist, die ein Warnsignal generiert, welches durch einen Signalgeber (8) ausgesendet wird, wobei die Energieversorgungseinheit (10) für den Empfänger (5), die Signalverarbeitungseinheit (7) und den Signalgeber (8) ggf. eine Solarzellenbaugruppe (11) aufweist,
**dadurch gekennzeichnet, dass** für die Signalübertragung (6) vom Sender (4) an den Empfänger (5) alternativ oder in Kombination Radar-, Infrarot-, Ultraschallsignale und dgl. und/oder akustische Signale vorgesehen sind.

2. Wildwarneinrichtung nach Anspruch 1,
**dadurch gekennzeichnet, dass** innerhalb der Energieversorgungseinheit (10) ein Speicherkondensator (12) vorhanden ist.

3. Wildwarneinrichtung nach einem der Ansprüche 1 bis 3,
**dadurch gekennzeichnet, dass** die Warnsignale in Tonhöhe, -stärke, -folge und -frequenz variabel gestaltet sind.

4. Wildwarneinrichtung nach einem der Ansprüche 1 bis 4, **dadurch gekennzeichnet, dass** über die Zeit zur Generierung des Warnsignals eine Geräuschmodulation vorgesehen ist.

5. Wildwarneinrichtung nach Anspruch 3 oder 4, **dadurch gekennzeichnet, dass** die Veränderungen der Warnsignale in Abhängigkeit von der Zeit, der Temperatur oder per Zufallsgenerator vorgesehen sind.
